# EUROPEAN PATENT APPLICATION

(11) **EP 4 693 997 A1**
(43) Date of publication of application: **11.02.2026**
(21) Application number: 24193869.5
(22) Date of filing: 09.08.2024
(51) Int. Cl.: H04L 5/00, H04B 7/06

(54) **USER EQUIPMENT AND BASE STATION USING SETS OF REFERENCE SIGNALS**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP); HORIUCHI, Ayako, Osaka, 571-8501 (JP); KURUVATTI, Nandish, 63225 Langen (DE)
(74) Representative: Grünecker Patent- und Rechtsanwälte PartG mbB

(57) **Abstract**

The present disclosure relates to a user equipment comprising the following. A receiverreceives at least a first and a second set of reference signals. A processing circuitry determines at least one of a trigger timing information of the second set of reference signals and a quasi co-location, QCL, relation between the first and the second set of reference signals.The processing circuit performs a function using reference signals from one or both sets of reference signals, based on at least one of the trigger timing information and the QCL relation between the first and second set of reference signals.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment with a defined behavior when using more than one set of reference signals, e. g. synchronization signal blocks, SSB.

In an embodiment, the techniques disclosed here feature a user equipment comprising the following. A receiver in operation receives at least a first and a second set of reference signals, a processing circuitry in operation determines at least one of a trigger timing information of the second set of reference signals and a quasi co-location, QCL, relation between the first and the second set of reference signals. The processing circuit in operation performs a function using reference signals from one or both sets of reference signals, based on at least one of the trigger timing information and the QCL relationship between the first and second set of reference signals.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN;
- **Fig. 3**: illustrates a simplified and exemplary implementation of a set of synchronization signal blocks distributed in a half-frame;
- **Fig. 4**: illustrates several beams and the corresponding SSB index, SSB1-SSB8, and how the beams are transmitted by the gNB in a beam-sweeping manner;
- **Fig. 5**: illustrates a signaling diagram for CSI measurement and reporting;
- **Fig. 6**: illustrates various scenarios for trigger timing of on-demand SSBs as an example of a second set of reference signals;
- **Fig. 7**: illustrates an exemplary and simplified structure of a UE and a gNB;
- **Fig. 8**: illustrates a structure of the UE according to an exemplary implementation of the improved use of multiple sets of reference signals;
- **Fig. 9**: illustrates a flow diagram for the UE behavior according to an exemplary implementation of the improved use of multiple sets of reference signals;
- **Fig. 10**: illustrates a first QCL relation between two sets of SSBs, in which the SSBs are fully quasi co-located;
- **Fig. 11**: illustrates a second QCL relation between two sets of SSBs, in which the SSBs are partially quasi co-located;
- **Fig. 12**: illustrates a third QCL relation between two sets of SSBs, in which the SSBs are not quasi co-located;
- **Fig. 13**: illustrates an exemplary implementation of the UE performing an L3 measurement;
- **Fig. 14**: illustrates a further exemplary implementation of the UE performing an L3 measurement;
- **Fig. 15**: illustrates a further exemplary implementation of the UE performing an L3 measurement;
- **Fig. 16**: illustrates an exemplary implementation of the UE performing an L1 measurement;
- **Fig. 17**: illustrates a further exemplary implementation of the UE performing an L1 measurement;
- **Fig. 18**: illustrates a further exemplary implementation of the UE performing an L1 measurement;
- **Fig. 20**: illustrates a further exemplary implementation of the UE performing a time/frequency synchronization; and
- **Fig. 21**: illustrates a further exemplary implementation of the UE performing a time/frequency synchronization.

### DETAILED DESCRIPTION

### 5G NR system architecture and protocol stacks

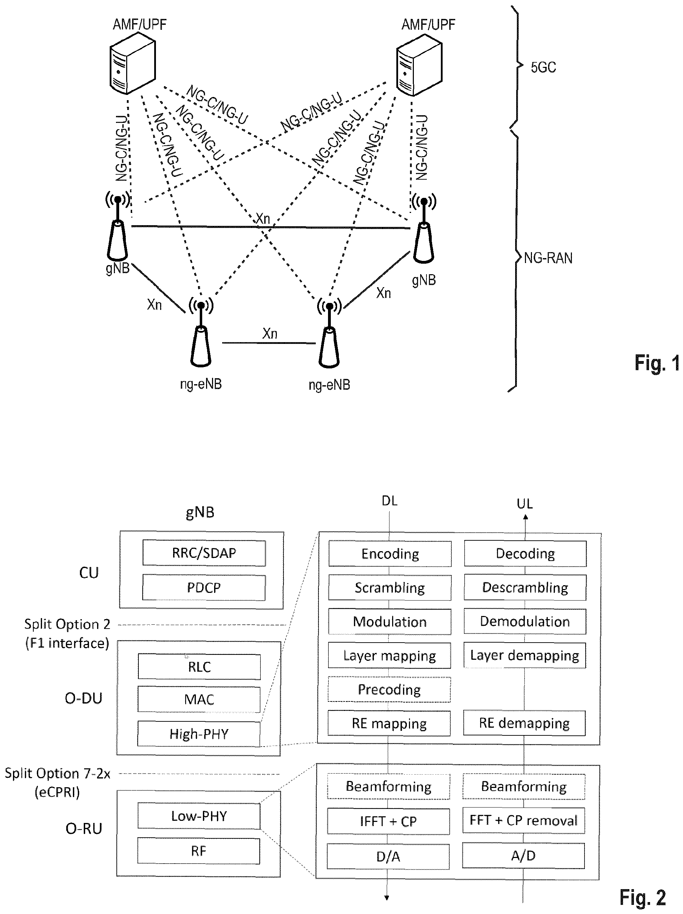

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.0.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

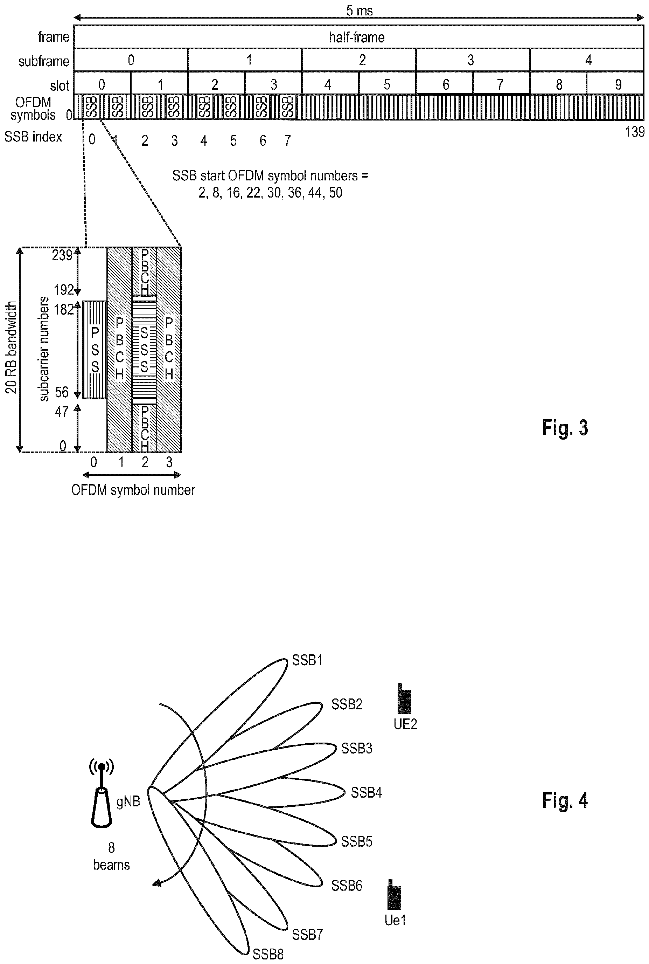

A simplified and exemplary illustration of the SSB according to the above definitions is illustrated in Fig. 3, which shows at the bottom part the PSS, SSS, and PBCH in the time and frequency domain.

The SSB set illustrated in Fig. 3 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 4****.** Similar to the exemplary assumption of Fig. 3, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0, e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator).

Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI).

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 3). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1.0, in section 6.3.

There are at least two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

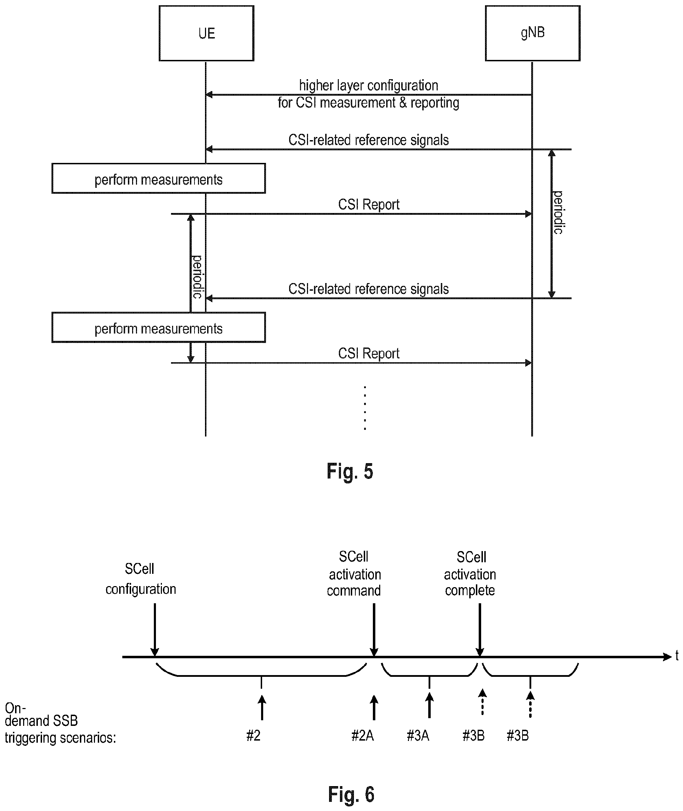

**Fig. 5** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication*".
- Step 3: One out of the 8 activated TCI states is then actually used by the UE to receive a target channel/signal. For example, the UE receives a DCI signal, which indicates one of the codepoints in the DCI field "*Transmission Configuration Indication*". The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DUUL operation).

For the uplink, the information element *TCI-UL-State* is defined in 3GPP TS 38.331, section 6.3.2.

### 3GPP evolution - On-demand SSB

As presented above, the network may or may not configure an (always-on) SSB to be periodically transmitted in a cell. There has been recent discussions on introducing and to trigger an additional on-demand SSB, that can be used by the UE e.g. for SCell time/frequency synchronization, L1/L3 measurements and SCell activation. On-demand SSB can be triggered in at least one of the scenarios depicted in Fig. 6. Regarding the UE assumption on SSB transmission on a cell supporting on-demand SSB SCell operation, the following cases can be identified:
Case #1: No always-on SSB on the cell
Case #2: Always-on SSB is periodically transmitted on the cell

For on-demand SSB SCell operation, the following two scenarios can be down-selected (both may be selected).
Scenario #2: SCell is configured to a UE but before the UE receives an SCell activation command (e.g., as defined in TS 38.321)
Scenario #3: After the UE receives an SCell activation command (e.g., as defined in TS 38.321)

This does not preclude the case where SCell activation is completed. Thus, at least for the scenarios and cases identified in Fig. 6, on-demand SSB can be triggered by gNB:
Scenario #2 and Case #1
Scenario #2 and Case #2
Scenario #2A and Case #1
Scenario #2A and Case #2
Scenario #3A and Case #1
Scenario #3A and Case #2
Scenario #3B and Case #1
Scenario #3B and Case #2

For Case #1, once an on-demand SSB is triggered, its transmission can be in a periodic manner. However, this does not imply that a periodic on-demand SSB is transmitted indefinitely after having been triggered.

As shown in Fig. 6, Scenario #2A refers to when the UE receives SCell activation command (e.g., as defined in TS 38.321). Scenario #3A refers to a time after the UE receives SCell activation command (e.g., as defined in TS 38.321) and until SCell activation is completed. Further, Scenario #3B refers to when SCell activation is completed and SCell is activated, or after the SCell activation is completed and SCell is activated.

It has already been agreed that, when an always-on SSB is already periodically transmitted in a cell, an on-demand SSB can be triggered at least in scenario #2, i.e. when an SCell is configured to a UE but before the UE receives an SCell activation command, or in scenario #2A, i.e. when the UE receives the SCell activation command.

However, it is still not clear how the UE and base station are to best make use of the on-demand SSB, e.g. in relation to UE functions such as time/frequency synchronization, L1 measurement, and L3 measurement.

Consequently, there is a need to specify the UE behavior when using at least one further set of SSBs, such as the on-demand SSB. Moreover, the specific UE behavior is not limited to the use of multiple SSBs, but may also be applicable for other reference signals, e.g., one of it can be CSI-RS.

### Further Improvements

The inventors thus identified the possibility to define an improved UE behavior and structure to avoid one or more of the above described disadvantages. The present invention relates to different solutions and variants for such an improved UE.

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression **"a set of one or more downlink reference signals"** can be broadly understood as referring directly to the "one or more downlink reference signals". An alternative expression is "a list of one or more downlink reference signals".

The expressions **"beam"** and **"downlink reference signal"** can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is **"spatial direction",** where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

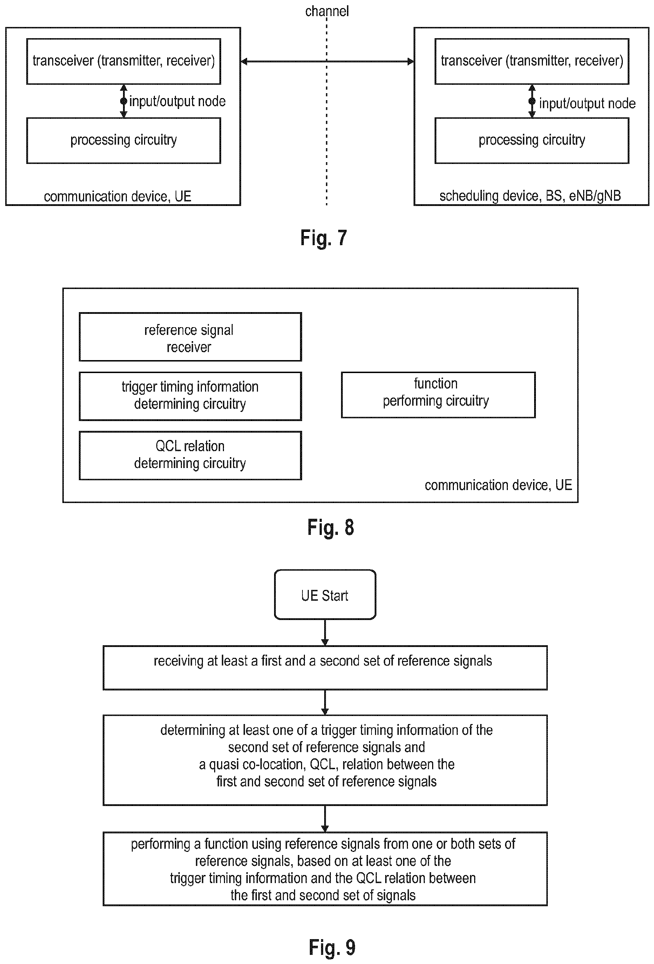

**Fig. 7** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved function performing by the UE in case of multiple sets of reference signals.

In connection with these solutions, improved UEs, improved base stations and improved integrated circuits are presented, which participate separately or together in the improved function performing by the UE in case of sets of multiple reference signals. Corresponding methods for the UE behavior and the base station behavior are provided as well. The integrated circuits may correspond to the UE and base station, and respectively their behavior.

**Fig. 8** illustrates a simplified and exemplary UE structure according to a basic implementation of the improved reference signal management procedure presented in more detail below. In one example, the UE structure can be implemented based on the general UE structure explained in connection with Fig. 7. The various structural elements of the UE illustrated in said Fig. 8 can be interconnected between one another e.g., with corresponding input/output nodes (not shown) e.g., in order to exchange control and user data and other signals. Although not shown for illustration purposes, the UE may include further structural elements.

As apparent from Fig. 8, the UE may include a reference signal receiver, a trigger timing information determining circuitry, a QCL relation determing circuitry, and a function performing circuitry. The processing circuitry of the general UE structure of Fig. 7 can function as the above trigger timing information determining circuitry, QCL relation determing circuitry, and function performing circuitry of Fig. 8, and can also perform further functions as will be become apparent from below. The transceiver of Fig. 7 can function as the above reference signal receiver of Fig. 8, and can also perform further functions as will become apparent from below.

One exemplary procedure is implemented by a UE that includes the following. A receiver receives at least a first and a second set of reference signals. A processing circuitry determines at least one of a trigger timing information of the second set of reference signals and a quasi co-location, QCL, relation between the first and the second set of reference signals. The processing circuit performs a function using reference signals from one or both sets of reference signals, based on at least one of the trigger timing information and the QCL relation between the first and second set of reference signals.

A corresponding exemplary method comprises the following steps performed by a UE:
receiving at least a first and a second set of reference signals,
determining at least one of a trigger timing information of the second set of reference signals and a quasi co-location, QCL, relation between the first and the second set of reference signals,
performing a function using reference signals from one or both sets of reference signals, based on at least one of the trigger timing information and the QCL relation between the first and second set of reference signals.

A corresponding sequence diagram for an exemplary UE behaviour in line with the above-discussed UE and UE method is presented in **Fig. 9****.**

The above-described improved procedure at the UE facilitates achieving the objective and overcoming at least some of the drawbacks explained above. In particular, the measurement of multiple sets of reference signals can be made more efficient and less UE power consuming.

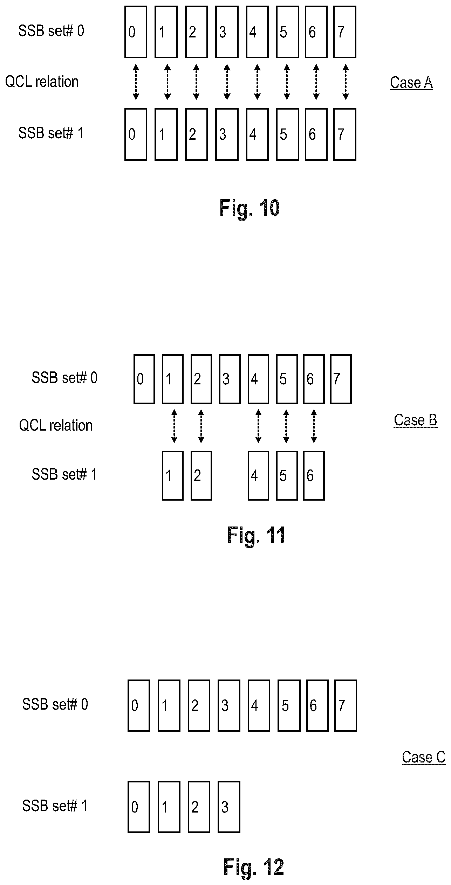

Now turning to **Fig. 10 to 12****,** three possible cases of a QCL relation between two reference signals are illustrated for the example of two sets of SSBs. It should be noted that instead of SSBs also other reference signals, e.g. CSI-RS, can be contemplated. Moreover, also QCL relations between more than one set of reference signals are within the scope of the present disclosure. As shown in Fig. 10 to 12, the UE is configured and/or indicated to use two sets of SSBs, where the relation of the two sets of SSBs could be one of the shown relations and up to the configuration.

Firstly, as shown in Fig. 10, a possible QCL relation (also referred to as QCL property) may be a full quasi co-location ("Case A", also referred to as fully QCLed). In this case, all the SSB indices within a burst of one set of SSBs are QCLed with all the SSBs indices within a burst of the other set of SSBs.

Next, as shown in Fig. 11, another possible QCL relation may be a partial quasi co-location ("Case B", also referred to as partially QCLed). In particular, only some of the SSB indices within a burst of one set of SSBs are QCLed with a subset the SSB indices within a burst of the other set of SSBs. In the shown example of Fig. 11, the SSBs with the indices 0, 3, and 7 of SSB set #0 are not QCLed with the respective SSBs of SSB set #1, whereas the SSBs with the indices 1, 2, 4, 5, and 6 of SSB set #0 are QCLed with the respective SSBs of SSB set #1. However, this correlation is only exemplary, any other number and particular indices are also possible for constituting the case of a partial quasi co-location.

Finally, as shown in Fig. 12, another possible QCL relation may be a non-quasi co-location ("Case C", also referred to as non-QCLed). In this case, any of the SSB indices within a burst of one set of SSBs are not QCLed with any SSB indices within a burst of the other set of SSBs. It should also be noted that the number of SSBs in the two sets of SSBs may also be equal as shown in Fig. 10, only with no quasi co-location between them.

For the different cases shown in Figures 10 to 12, the QCL relation can be used but is not limited to following scenarios:
Case A: co-located cells/TRPs deployment
Case B: co-located cells/TRPs deployment, only subset of the beams for traffic scheduling for a UE
Case C: co-located cells/TRPs deployment with different beam widths, or non-co-located cells/TRPs deployment.

It is also noted that the time domain resource overlapping relation of the two sets of SSBs is irrelevant for their QCL relation. They can either be TDMed or FDMed or TDMed and FDMed.

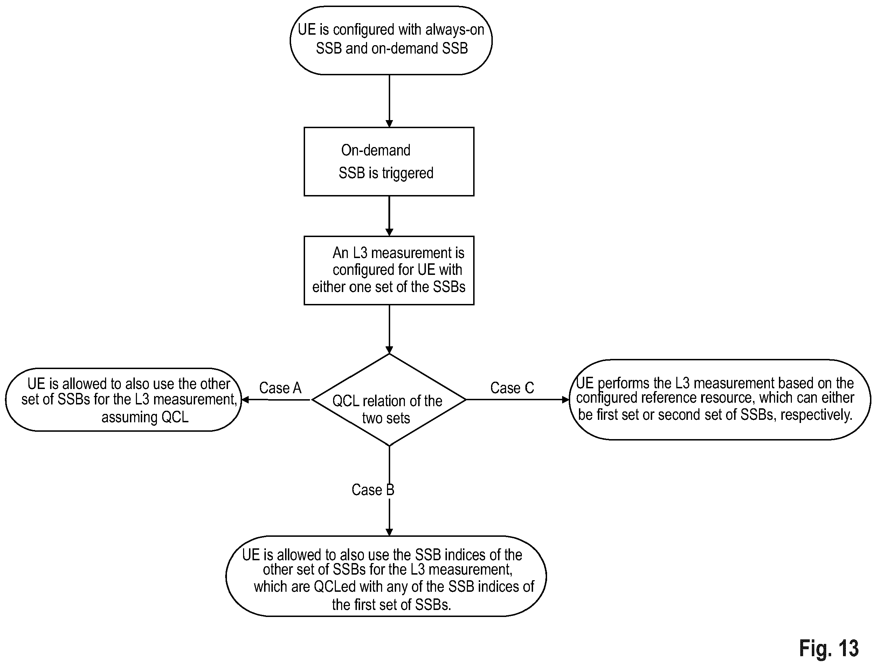

With reference to **Fig. 13****,** a first exemplary implementation of an L3 measurement using QCL relation for influencing the UE behavior will be explained. For example, the UE may be configured with a first set of SSBs, which is a set of always-on SSBs and is transmitted periodically. The UE is also configured (or indicated or triggered) with a second set of SSBs by either RRC/MAC CE/DCI. This second set of SSBs may be (but is not restricted to) an on-demand set of SSBs. On-Demand SSBs are a feature introduced to improve the efficiency and flexibility of SSBs. Generally, always-on SSBs are periodically broadcasted by the gNB to help UEs discover the network, synchronize, and obtain crucial system information. However, the constant transmission of SSBs can lead to inefficiencies, especially in scenarios where there is low user activity or in energy-constrained deployments. On-demand SSBs aim to address these inefficiencies.

In particular, in one exemple, on-demand SSBs can be the result of an UE-initiated request. UEs can signal the need for an SSB when they power on or when they lose synchronization with the network. This can be implemented using a random access procedure or other signaling mechanisms to request SSB transmission from the gNB. Further, the on-demand SSBs can result from a network-initiated trigger. The network can decide to transmit additional on-demand SSBs based on certain conditions, such as detecting user activity in a specific area, time-of-day patterns, or based on UE movement and location predictions. Advanced analytics and Al can be used to predict when and where SSBs are needed, allowing the network to dynamically adjust its broadcasting strategy.

Further, the SSBs can be configured by an adaptive SSB configuration. The gNB can adapt its SSB transmission strategy based on traffic load, user density, and environmental conditions. This can include dynamically adjusting the periodicity, beam configuration, and power levels of SSB transmissions.

According to the present disclosure, the UE determines at what instance in time the second set of SSBs is transmitted or triggered. The various possibilities of trigger timing information are illustred in Fig. 6. Further, the UE determines a QCL relation between the first and second set of SSBs. For instance, the UE may receive the trigger timing information and the information regarding the QCL relation from the network. In one example the QCL relation information can be transmitted by the gNB together with the configuration of the second set of SSBs, and the trigger timing information can be transmitted by the gNB in a system information broadcast or dedicated messages to the UEs.

The second set of SSBs can be transmitted or triggered in any of Scenarios #2, #2A, #3A and #3B as shown in Fig. 6. An L3 measurement is configured for the UE with either one set of the two SSB sets.

As shown in Fig. 13, the UE determines the QCL relation between the two sets of SSBs. If the QCL relation of the first and second set of SSBs is Case A, i.e. if the two sets of SSBs are fully QCLed, the UE is allowed to also use the other set of SSBs for the L3 measurement, in addition to using the configured set of SSBs. If the QCL relation between the first and second set of SSBs is Case B, i.e. if the two sets of SSBs are only partially QCLed, the UE is allowed to also use the SSB indices of the other set of SSBs for the L3 measurement, which are QCLed with any of the SSB indices of the configured set of SSBs (see Fig. 11). Finally, if the QCL relation of the first and second set of SSBs is Case C (see Fig. 12), i.e. the SSBs of the two sets are not QCLed at all, the UE performs the L3 measurement based on the previously-configured SSB set.

It should be noted that also other permutations of the scenarios of Figure 6 and the QCL relations can be implemented.

Advantageously, the described QCL relation-based UE behavior can improve the measurement accuracy with better resource efficiency and save UE power by potentially shortening the total measurement time.

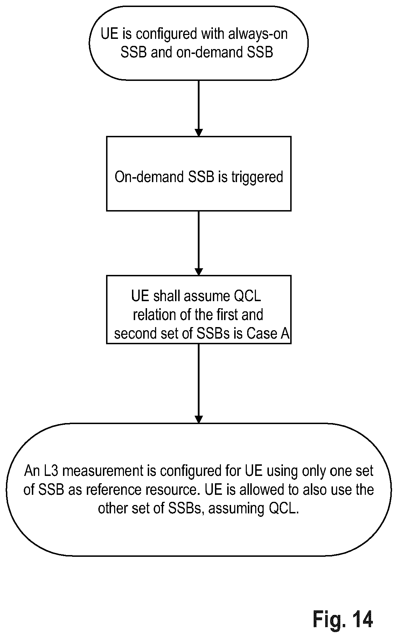

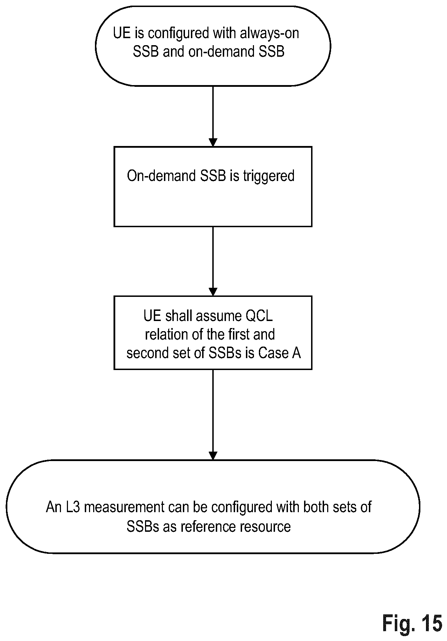

According to another exemplary implementation, instead of determining the QCL relation and acting based on the determined QCL relation, the UE may also just assume a fully quasi co-location between the two sets of SSBs. This exemplary implementation will now be explained with reference to **Fig. 14** **and** **15****.**

Again, the UE is configured with a first set of SSBs, which may be a set of always-on SSBs and is transmitted periodically. The UE is also configured or indicated or triggered with a second set of SSBs by either RRC/MAC CE/DCI. The second set of SSBs may be a set of on-demand SSBs.

If the second set of SSBs is triggered or transmitted in Scenario #2 of Figure 6, i.e. after a secondary cell, SCell, has been configured, but before an SCell activation command has been received by the UE, the UE shall assume that the QCL relation of the first and second set of SSBs is Case A (Fig. 10), i.e. that the two sets of SSBs are fully quasi co-located. In other words, the UE determines the Full QCL relation from the timing (in Scenario #2) of the second SSB-set triggering, e.g. without the need of receiving and processing of information from the gNB regarding the QCL relation of the two SSB sets.

As shown in Fig. 14, in this case firstly an L3 measurement may be configured for the UE using only one set of SSBs as reference resource. The UE is allowed to also use the other set of SSBs for the L3 measurement, assuming a full QCL.

As an alternative and as shown in Fig. 15, an L3 measurement can be configured with both sets of SSBs as reference resources. Correspondingly, the UE would use both SSB sets for the L3 measurement as configured.

It should be noted that Scenario #2 may be more typical for L3 measurement. However, the principles of the present disclosure also apply for any of Scenarios #2, #2A, #3A, #3B. In particular, if the second set of SSBs is triggered or transmitted in Scenario #2A (or in Scenario #3A or in Scenario #3B) of Figure 6, the UE shall assume that the QCL relation of the first and second set of SSBs is Case A (Fig. 10), i.e. that the two sets of SSBs are fully quasi co-located.

Advantageously, the QCL relation-based UE behavior can improve the measurement accuracy with better resource efficiency and save UE power by potentially shortening the total measurement time. The additional and strong restriction of the implementation according to Fig. 14 and 15, e.g. for the combination of Scenario #2 and Case A, may reduce the UE complexity for L3 measurement. It should be noted that Scenario #2 indicates an early point in time in the processing of the second set of SSBs. At such early stage, the SSB processing is advantageously dealt with using a less flexible, but simple and clearly defined UE behavior.

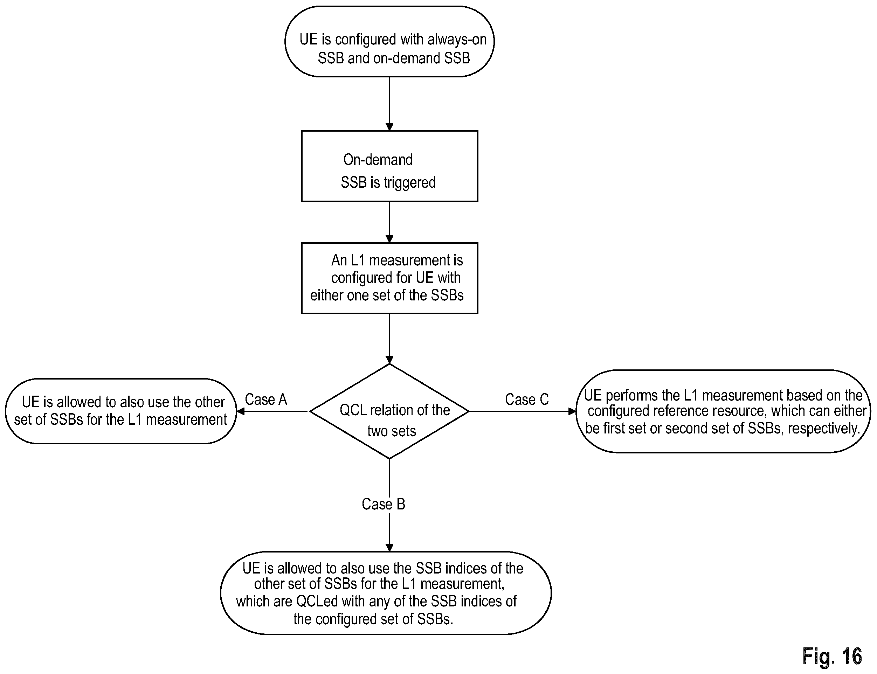

Now turning to **Fig. 16****,** a further exemplary implementation is shown. According to this implementation, an L1 measurement is performed by the UE based on the trigger timing information and the QCL relation between two sets of SSBs. This implementation can be used for any of the Scenarios of Fig. 6, but may be used with one of the Scenarios #2A, #3A, and #3B. L1 measurements typically provide more detailed measurements that can be useful for determining a best beam or channel for communication and thus might not be necessary or configured for Scenario #2, because the SCell is only configured but not activated.

The UE is configured with a first set of SSBs, which may be an always-on set of SSBs and may be transmitted periodically. The UE is also configured or indicated or triggered with a second set of SSBs by either RRC/MAC CE/DCI. The second set of SSBs may be an on-demand set of SSBs.

In general, the second set of SSBs is triggered or transmitted in any of Scenarios #2A, #3A and #3B of Fig. 6. An L1 measurement is configured for UE with either one set of the two SSB sets (e.g., the second set). Further, if the QCL relation of the first and second set of SSBs is according to Case A (Fig. 10), i.e. indicates a full quasi co-location, the UE is allowed to also use the other set of SSBs (e.g., the first set) for the L1 measurement, in addition to using the configured SSB set.

Alternatively, if the QCL relation of the first and second set of SSBs is according to Case B (Fig. 11), i.e. indicates a partial quasi co-location, the UE is allowed to also use the SSB indices of the respective other set of SSBs (e.g., the first set) for the L1 measurement, which are QCLed with any of the SSB indices of the configured set of SSBs.

Finally, if the QCL relation of the first and second set of SSBs is according to Case C (Fig. 12), i.e. indicates that no quasi co-location exists at all between the two SSB sets, the UE performs the L1 measurement based on the previously-configured SSB set.

It should be noted that it is more typical and prioritized to use an on-demand SSB for the L1 measurement in Scenario #2A, #3A and #3B, such that the UE may be configured to use the on-demand SSB for performing the L1-measurements. However, the L1 measurement may be configured with either set of SSBs, be it the always-on or the on-demand SSB set.

Advantageously, the QCL relation-based UE behavior can improve the measurement accuracy with better resource efficiency and save UE power by potentially shortening the total measurement time.

The above implementation described in connection with Fig. 16 refers primarily to Scenarios #2A, #3A and #3B. However, the implementation is not limited in said respect. Assuming the Scenario #2 of Fig. 6 (i.e. a trigger timing information that indicates the second set of SSBs has been triggered after a secondary cell, SCell, has been configured, but before an SCell activation command has been received by the UE), a similar flowchart as the one shown in Fig. 16 is applicable. For instance, using the improved L1 measurements also for Scenario #2 can be particularly useful for an L1/L2-triggered mobility (LTM) function which relies on such lower-layer measuremens, rather than for the typical and conventional CSI measurement.

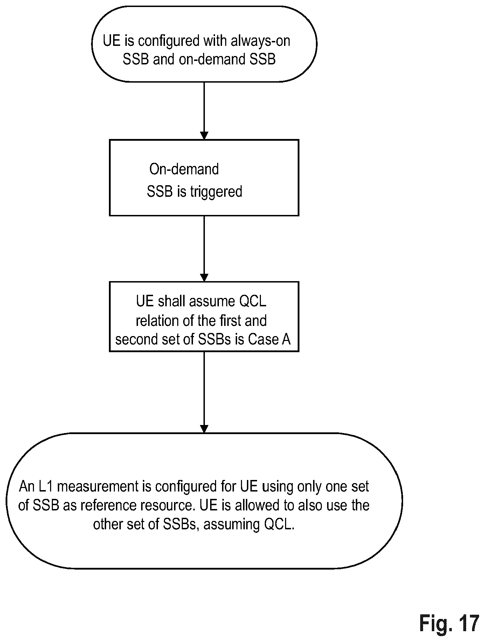

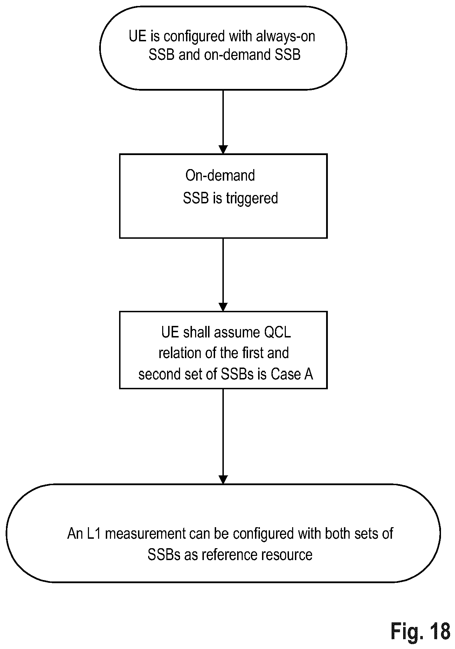

Now referring to **Fig. 17** **and** **18****,** a further exemplary implementation relating to the L1 measurement that allows a reduction of the complexity of the UE will be explained.

In particular, the UE is configured with a first set of SSBs, which may be an always-on set of SSBs and may be transmitted periodically. The UE is also configured or indicated or triggered with a second set of SSBs by either RRC/MAC CE/DCI, which may be an on-demand set of SSBs.

If the second set of SSBs is triggered in any of Scenario #2, #2A, #3A and #3B according to Fig. 6, the UE shall assume that the QCL relation between the first and second set of SSBs is Case A (Figure 10), i.e. indicates a full quasi co-location. In one example, an L1 measurement is configured for the UE using only one set of SSB as the reference resource. As shown in Fig. 17, the UE is allowed to also use the other set of SSBs, assuming full QCL, in addition to using the configured SSB set. Alternatively, as shown in Fig. 18, an L1 measurement can be configured with both sets of SSBs as reference resources, such that the UE would use both SSB sets for performing L1 measurements.

The merits of these solutions can be seen in the fact that the QCL relation-based UE behavior can improve the measurement accuracy with better resource efficiency and save UE power by potentially shortening the total measurement time. Furthermore, however, the additional and strong restriction to assuming Case A may reduce the UE complexity for the L1 measurement.

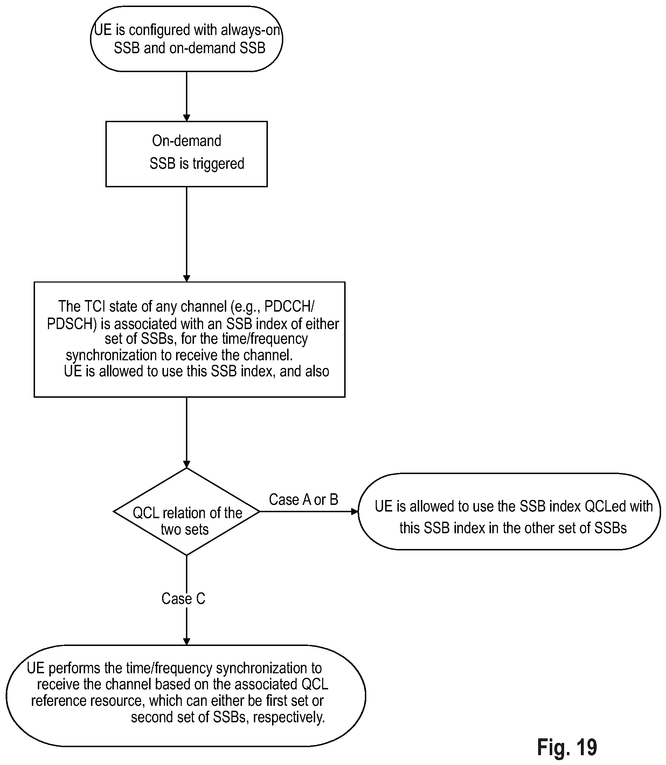

Now referring to **Fig. 19****,** a further exemplary implementation relating to the T/F synchronization as the function to be performed by the UE will be explained. The sequence of steps shown in Fig. 19 advantageously is applied for Scenario #3B, which refers to when the SCell activation is completed and the SCell is activated, or after the SCell activation is completed and the SCell is activated. The UE may synchronize in time and frequency to a channel that is transmitted on the activated SCell. The UE is configured with a first set of SSBs, which may be an always-on set of SSBs and may be transmitted periodically.

The UE is also configured or indicated or triggered with a second set of SSBs by either RRC/MAC CE/DCI, which may be an on-demand set of SSBs. The second set of SSBs is triggered in Scenario #3B. The TCI state of any channel (e.g., PDCCH/PDSCH) is associated with an SSB index of either set of SSBs, usable by the UE for the time/frequency synchronization to be able to properly receive the channel. The UE can use this associated SSB index of the one SSB set, and is allowed to also use the SSB index of the other SSB set that is QCLed with this associated SSB index , if the QCL relation of the first and second set of SSBs is either according to Case A or B (Fig. 10 or 11, respectively).

On the other hand, if the QCL relation of the first and second set of SSBs is according to Case C (Fig. 12), i.e. indicates no quasi co-location at all, the UE performs the time/frequency synchronization to receive the channel based on the associated SSB index; in other words, the UE follows the configured TCI state only.

Advantageously, the QCL relation-based UE behavior can improve the synchronization accuracy with efficient resource usage and shorten the time latency needed for synchronization.

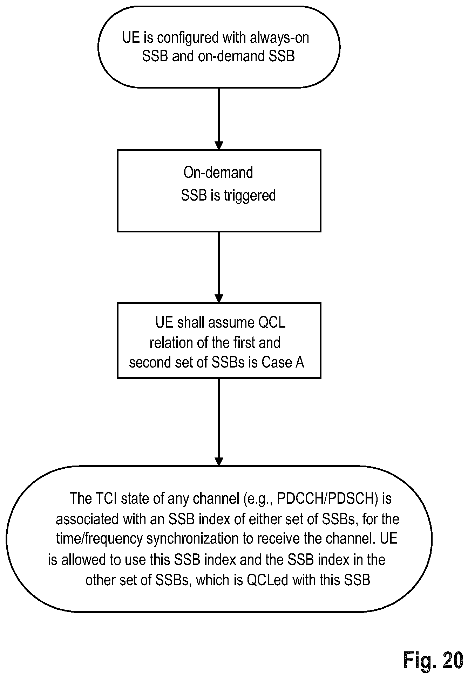

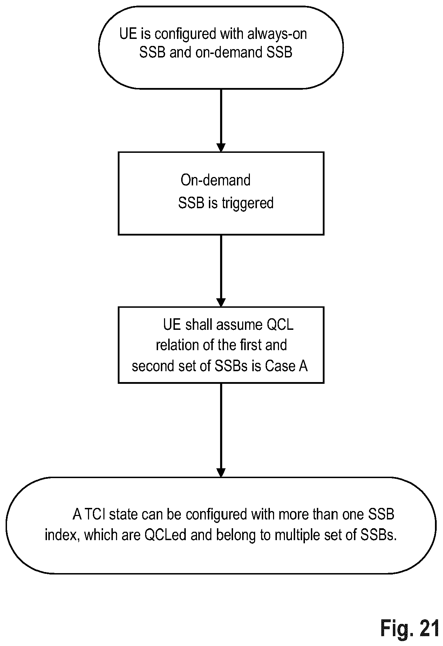

Now referring to **Fig. 20** **and** **21****,** a further exemplary implementation relating to the T/F synchronization as the function to be performed by the UE will be explained. According to this implementation, the UE does not receive the information about the actual QCL relation between the two SSB sets, but assumes that Case A of Fig. 10 is applicable.

In particular, the UE is configured with a first set of SSBs, which may be an always-on set of SSBs and may be transmitted periodically. The UE is also configured or indicated or triggered with a second set of SSBs by either RRC/MAC CE/DCI, which may be an on-demand set of SSBs.

If the second set of SSBs is triggered in Scenario #3B, the UE shall assume that the QCL relation of the first and second set of SSBs is according to Case A (Figure 10), i.e. a full quasi co-location exists between the two SSB sets.

Then, the TCI state of any channel (e.g., PDCCH/PDSCH) is associated with an SSB index of either set of SSBs, for the time/frequency synchronization to receive the channel. The UE can use this associated SSB index and is further allowed to use the SSB index in the other set of SSBs, which is QCLed with this associated SSB, as shown in Fig. 20. Alternatively, as shown in Fig. 21, a TCI state can be configured with more than one SSB index, wheren the multiple SSB indices are QCLed and belong to multiple set of SSBs. In this case, the UE uses the multiple SSB indices for the time/frequency synchronization.

The merit of these solutions as shown in Fig. 20 and 21 can be seen in the fact that the QCL relation-based UE bahaviour can improve the synchronization accuracy with efficient resource usage and shorten the time latency needed for synchronization. Further, the additional and strong restriction for Case A may reduce the UE complexity for time/frequency synchronization before receiving the DL channel.

Regarding the exemplary implementations shown in Fig. 19, 20 and 21, it should be mentioned that these implementations are analogously applicable to a function, according to which the UE performs a mapping ofSSBs to PRACH occasions.

Furthermore, in the shown examples, always two sets of SSBs were mentioned. These can be, but are not limited to the following combinations: One set is always-on and one set is on-demand, both sets are always-on, or both sets are on-demand.

Further, although only two sets of SSB operation has been described, also multiple sets of SSBs can be used.

As mentioned already, not only SSBs, but also other reference signals are intended to be covered by the present disclosure, e.g., one of it can be CSI-RS. Two or more sets of CSI-RS would be available to the UE, in a corresponding manner as described above for the two sets of SSBs.

In the above, it was assumed that the SSB sets are configured and transmitted in an SCell. Although the use case of the SCell is the main intention in above explained implementations and the most typical and applicable case, the present disclosure is not limited to this example. Generally, the present disclosure is also applicable to other types of cells, such as a PCell. Furthermore, the present disclosure is also application for scenarios in which the multiple sets of reference signals are transmitted among multiple cells, e.g. one SSB set in one cell and another SSB set in another cell.

Moreover, the above solutions were described in that the UE is configured with a first set of SSBs. Alternatively, instead of being explicitly configured with a set of SSBs, the UE more generally can obtain a first set of SSBs, which also allows for a blind-decoding of an SSB set without a prior explicit configuration of same. This UE capability can be useful in connection with PCell/spCell usage, as the result of performing cell reselection.

In one example, on-demand SSBs typically can be used for L3 measurements in Scenario #2, so as to then report the L3 measurement results to the gNB and thereby to assist the gNB to determine which SCell to activate (using the SCell activation command, see Scenaio #2A).

In one example, the on-demand SSB can also be used for L1 measurement in Scenario #2A, #3A and #3B, so as to then report the L1 measurement results to the gNB and thereby to assist the gNB in scheduling radio resources to the UEs.

In one example, the on-demand SSB ca also be used for time/frequency synchronization in Scenario #3B to receive e.g. PDCCH and PDSCH, after the SCell activation is complete and the gNB can start scheduling traffic on the downlink channels e.g. PDCCH/PDSCH.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively.

PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a UE is provided that includes the following. A receiver receives at least a first and a second set of reference signals. A processing circuitry determines at least one of a trigger timing information of the second set of reference signals and a quasi co-location, QCL, relation between the first and the second set of reference signals. The processing circuit performs a function using reference signals from one or both sets of reference signals, based on at least one of the trigger timing information and the QCL relation between the first and second set of reference signals.

According to a second aspect provided in addition to the first aspect, the function comprises one of: a time/frequency domain synchronization, a Layer-1, L1, measurement, a Layer-3, L3, measurement, and an SSB to PRACH occasion mapping.

According to a third aspect provided in addition to the first or second aspect, the first set of reference signals is an always-on reference signal, and/or wherein the second set of reference signals is an on-demand reference signal.

According to a fourth aspect, provided in addition to any one of the first to third aspects, the QCL relation comprises a full quasi co-location, a partial quasi co-location, or a non-quasi co-location.

According to a fifth aspect, provided in addition to any one of the first to fouth aspects, the function comprises performing Layer-3, L3, measurements, wherein the UE is configured with a first set of SSBs forming the first set of reference signals, and wherein the UE is configured to receive a second set of SSBs forming the second set of reference signals, wherein the L3 measurement is configured for the UE with either one set of the first and second set of SSBs, wherein the UE is allowed to use also any of the SSBs of the other set of SSBs for the L3 measurement, if the QCL relation is a full quasi co-location.

In an optional implementation, the UE is allowed to also use those SSBs of the other set of SSBs for the L3 measurement, which are quasi co-located with any SSBs of the configured set of SSBs, if the QCL relation is a partial quasi co-location.

In an optional implementation, the UE in operation performs the L3 measurement based the configured set of SSBs, if the QCL relation is a non-quasi co-location.

According to a sixth aspect provided in addition to the fifth aspect, the UE assumes that the QCL relation is a full quasi co-location, if the trigger timing information indicates that the second set of reference signals has been triggered before the UE receives a activation command for activating a previously-configured cell in which the second set of SSBs is transmitted.

According to a seventh aspect, provided in addition to any one of the first to sixth aspects, an L3 measurement is configured for the UE using only one set of SSBs, and the UE is allowed to also use the other set of SSBs for performing the L3 measurements.

In an optional implementation, an L3 measurement can be configured with both sets of SSBs, and the UE uses both sets of SSBs for performing the L3 measurements.

According to an eighth aspect, provided in addition to any one of the first to seventh aspects, the function comprises performing Layer-1, L1, measurements, wherein the UE is configured with a first set of SSBs forming the first set of reference signals, and wherein the UE is configured to receive a second set of SSBs forming the second set of reference signals, wherein the L1 measurement is configured for the UE with either one set of SSBs, and wherein the UE is allowed to also use any of the SSBs of the other set of SSBs for the L1 measurement, if the QCL relation of the first and second set of SSBs is a full quasi co-location.

In an optional implementation, the UE is allowed to also use those SSB of the other set of SSBs for the L1 measurement, which are quasi co-located with any SSBs of the configured set of SSBs, if the QCL relation is a partial quasi co-location.

In an optional implementation, the UE in operation performs the L1 measurement based on the configured set of SSBs, the reference resource comprising either the first or the second set of SSBs, if the QCL relation is a non-quasi co-location.

According to a ninth aspect, provided in addition to any one of the first to eighth aspects, the second set of SSBs is triggered by either RRC/MAC CE/DCI.

According to a tenth aspect, provided in addition to any one of the eighth or ninth aspects, the UE assumes that the QCL relation is a full quasi co-location, if the trigger timing information indicates that the second set of reference signals has been triggered when or after the UE receives an activation command for activating a previously-configured cell in which the second set of SSBs is transmitted, wherein the L1 measurement is configured for the UE using only one set of SSBs, and the UE is allowed to also use the other set of SSBs for performing the L1 measurements, or wherein the L1 measurement can be configured with both sets of SSBs, and the UE uses both sets of SSBs for performing the L1 measurements.

According to an eleventh aspect, provided in addition to any one of the first to tenth aspects, the function comprises performing the time/frequency domain synchronization for a channel in a cell that is activated, wherein the UE is configured with a first set of SSBs forming the first set of reference signals, the first set of SSB being always-on, and wherein the UE is configured to receive a second set of SSBs forming the second set of reference signals, the second set of SSBs being on-demand, and wherein a configuration of a channel is associated with an SSB index of either set of the first and second set of SSBs, for performing the time/frequency synchronization with the channel, and wherein the UE is allowed to use the SSB having this associated SSB index, and is also allowed to use the an SSB of the other set of SSBs, which is quasi co-located with this associated SSB , if the QCL relation of the first and second set of SSBs is either a full or a partial quasi co-location.

In an optional implementation, the UE performs the time/frequency synchronization to receive the channel based on the SSB having this associated SSB index, respectively, if the QCL relation of the first and second set of SSBs is a non-quasi co-location.

According to a twelfth aspect, provided in addition to any one of the first to eleventh aspects, the UE assumes that the QCL relation of the first and second set of SSBs is a full quasi co-location, wherein the UE is allowed to use the SSB having the associated SSB index in the other set of SSBs, or wherein the configuration of the channel can be configured with more than one SSB index, respectively of the first and second sets of SSBs.

According to a thirteenth aspect, provided in addition to any one of the first to twelfth aspects, the first and second set of reference signals are respectively synchronization signal blocks, SSBs, or Channel State Information, CSI, reference signals.

According to a fourteenth aspect, provided in addition to any one of the first to thirteenth aspects, the processing circuitry further generates, based on results of L1 or L3 measurements performed by the UE on the first and second reference signals a report, and wherein the UE further comprises a transmitter, which in operation, transmits the generated report to a base station.

According to a fifteenth aspect, a method is provided comprising the following steps performed by a user equipment, UE:
receiving at least a first and a second set of reference signals,
determining at least one of a trigger timing information of the second set of reference signals and a quasi co-location, QCL, relation between the first and the second set of reference signals,
performing a function using reference signals from one or both sets of reference signals, based on at least one of the trigger timing information and the QCL relation between the first and second set of reference signals.

According to a sixteenth aspect, an integrated circuit is provided which, in operation, controls a process of a user equipment, UE, the process comprising the following steps performed by the UE:
receiving at least a first and a second set of reference signals,
determining at least one of a trigger timing information of the second set of reference signals and a quasi co-location, QCL, relation between the first and the second set of reference signals,
performing a function using reference signals from one or both sets of reference signals, based on at least one of the trigger timing information and the QCL relation between the first and second set of reference signals.

According to a seventeenth aspect, a base station is provided, which includes the following. A transmitter transmits, to a user equipment, UE, at least a first and a second set of reference signals, and at least one of a trigger timing information of the second set of reference signals and a quasi co-location, QCL, relation between the first and the second set of reference signals. The trigger timing information of the second set of reference signals and/or a quasi co-location, QCL, relation between the first and the second set of reference signals are usable by the UE for performing a function using reference signals from one or both sets of reference signals, based on at least one of the trigger timing information and the QCL relation between the first and second set of reference signals.

## Claims

1. A user equipment, UE, comprising:
a receiver, which in operation receives at least a first and a second set of reference signals,
a processing circuitry, which in operation, determines at least one of a trigger timing information of the second set of reference signals and a quasi co-location, QCL, relation between the first and the second set of reference signals,
the processing circuit, which in operation, performs a function using reference signals from one or both sets of reference signals, based on at least one of the trigger timing information and the QCL relation between the first and second set of reference signals.

2. The UE according to claim 1, wherein the function comprises one of: a time/frequency domain synchronization, a Layer-1, L1, measurement, a Layer-3, L3, measurement, and an SSB to PRACH occasion mapping.

3. The UE according to any one of claims 1 or 2, wherein the first set of reference signals is an always-on reference signal, and/or wherein the second set of reference signals is an on-demand reference signal.

4. The UE according to any one of claims 1 to 3, wherein the QCL relation comprises a full quasi co-location, a partial quasi co-location, or a non-quasi co-location.

5. The UE according to any one of claims 1 to 4, wherein the function comprises performing Layer-3, L3, measurements, wherein the UE is configured with a first set of SSBs forming the first set of reference signals, and wherein the UE is configured to receive a second set of SSBs forming the second set of reference signals, and
wherein the L3 measurement is configured for the UE with either one set of the first and second set of SSBs, wherein the UE is allowed to use also any of the SSBs of the other set of SSBs for the L3 measurement, if the QCL relation is a full quasi co-location, and/or
wherein the UE is allowed to also use those SSBs of the other set of SSBs for the L3 measurement, which are quasi co-located with any SSBs of the configured set of SSBs, if the QCL relation is a partial quasi co-location, and/or
wherein the UE in operation performs the L3 measurement based the configured set of SSBs, if the QCL relation is a non-quasi co-location.

6. The UE according to claim 5, wherein the UE assumes that the QCL relation is a full quasi co-location, if the trigger timing information indicates that the second set of reference signals has been triggered before the UE receives a activation command for activating a previously-configured cell in which the second set of SSBs is transmitted.

7. The UE according to any one of claims 1 to 6, wherein an L3 measurement is configured for the UE using only one set of SSBs, and the UE is allowed to also use the other set of SSBs for performing the L3 measurements, or
wherein an L3 measurement can be configured with both sets of SSBs, and the UE uses both sets of SSBs for performing the L3 measurements.

8. The UE according to any one of claims 1 to 7, wherein the function comprises performing Layer-1, L1, measurements, wherein the UE is configured with a first set of SSBs forming the first set of reference signals, and wherein the UE is configured to receive a second set of SSBs forming the second set of reference signals, and
wherein the L1 measurement is configured for the UE with either one set of SSBs, and
wherein the UE is allowed to also use any of the SSBs of the other set of SSBs for the L1 measurement, if the QCL relation of the first and second set of SSBs is a full quasi co-location, and/or
wherein the UE is allowed to also use those SSB of the other set of SSBs for the L1 measurement, which are quasi co-located with any SSBs of the configured set of SSBs, if the QCL relation is a partial quasi co-location, and/or
wherein the UE in operation performs the L1 measurement based on the configured set of SSBs, the reference resource comprising either the first or the second set of SSBs, if the QCL relation is a non-quasi co-location.

9. The UE according to any one of claims 1 to 8, wherein the second set of SSBs is triggered by either RRC/MAC CE/DCI.

10. The UE according to any one of claims 8 or 9, wherein the UE assumes that the QCL relation is a full quasi co-location, if the trigger timing information indicates that the second set of reference signals has been triggered when or after the UE receives an activation command for activating a previously-configured cell in which the second set of SSBs is transmitted, and
wherein the L1 measurement is configured for the UE using only one set of SSBs, and the UE is allowed to also use the other set of SSBs for performing the L1 measurements, or
wherein the L1 measurement can be configured with both sets of SSBs, and the UE uses both sets of SSBs for performing the L1 measurements.

11. The UE according to any one of claims 1 to 10, wherein the function comprises performing the time/frequency domain synchronization for a channel in a cell that is activated, wherein the UE is configured with a first set of SSBs forming the first set of reference signals, the first set of SSB being always-on, and wherein the UE is configured to receive a second set of SSBs forming the second set of reference signals, the second set of SSBs being on-demand, and
wherein a configuration of a channel is associated with an SSB index of either set of the first and second set of SSBs, for performing the time/frequency synchronization with the channel, , and
wherein the UE is allowed to use the SSB having this associated SSB index, and is also allowed to use the an SSB of the other set of SSBs, which is quasi co-located with this associated SSB , if the QCL relation of the first and second set of SSBs is either a full or a partial quasi co-location, and/or
wherein the UE performs the time/frequency synchronization to receive the channel based on the SSB having this associated SSB index, respectively, if the QCL relation of the first and second set of SSBs is a non-quasi co-location.

12. The UE according to any one of claims 1 to 11, wherein the UE assumes that the QCL relation of the first and second set of SSBs is a full quasi co-location, and wherein the UE is allowed to use the SSB having the associated SSB index in the other set of SSBs , or
wherein the configuration of the channel can be configured with more than one SSB index, respectively of the first and second sets of SSBs.

13. The UE according to any one of claims 1 to 12, wherein the first and second set of reference signals are respectively synchronization signal blocks, SSBs, or Channel State Information, CSI, reference signals.

14. The UE according to any one of claims 1 to 13, wherein the processing circuitry further generates, based on results of L1 or L3 measurements performed by the UE on the first and second reference signals a report, and wherein the UE further comprises a transmitter, which in operation, transmits the generated report to a base station.

15. A base station comprising:
a transmitter, which in operation, transmits, to a user equipment, UE, at least a first and a second set of reference signals, and
at least one of a trigger timing information of the second set of reference signals and a quasi co-location, QCL, relation between the first and the second set of reference signals,
the trigger timing information of the second set of reference signals and/or a quasi co-location, QCL, relation between the first and the second set of reference signals being usable by the UE for performing a function using reference signals from one or both sets of reference signals, based on at least one of the trigger timing information and the QCL relation between the first and second set of reference signals.
